# FASCICULE DE BREVET EUROPEEN

(11) **EP 1 400 194 B1**
(45) Date de publication et mention de la délivrance du brevet: **23.08.2006**
(21) Numéro de dépôt: 03292298.1
(22) Date de dépôt: 18.09.2003
(51) Int. Cl.: A47J 37/06

(54) **Sous-ensemble chauffant d'un appareil electrique du type gaufrier**
Heizbaugruppe eines elektrischen Apparates vom Typ eines Waffeleisens
Heating subassembly of an electrical apparatus of the waffle iron type

(30) Priorité: 20.09.2002 FR 0211693
(43) Date de publication de la demande: 24.03.2004
(73) Titulaire: SEB SA, 69130 Ecully (FR)
(72) Inventeur: Moine, Olivier, 73100 Aix-Les-Bains (FR)
(74) Mandataire: Pichat, Thierry

(56) Documents cités:
- EP-A- 0 462 872
- US-A- 1 969 361
- US-A- 4 091 720

## Description

La présente invention concerne un sous-ensemble chauffant d'un appareil électrique du type gaufrier, c'est à dire, par exemple, un gaufrier, un cuiseur de madeleines, un gril à croque-monsieurs ou à sandwichs (panini) .

On connaît un tel sous-ensemble chauffant comme décrit dans le document US 1969361A, du type comportant une plaque de cuisson en creux qui est délimitée par un plan de jonction périphérique; qui possède au moins une cavité apte à recevoir un aliment à cuire, débouchant dans le plan de jonction, et munie d'empreintes reprenant la forme de l'aliment, et qui présente un plan de fond, une résistance électrique disposée contre la face de la plaque de cuisson opposée à celle portant les empreintes, et une plaque de diffusion comportant un logement recevant la résistance disposée entre la plaque de cuisson et la plaque de diffusion.

La plaque de diffusion de l'art antérieur est plane et lisse, hormis le logement qui épouse la forme de la résistance. Une telle plaque de diffusion est utilisée, d'une part, pour servir d'appui à la plaque de cuisson et ainsi faciliter le changement des plaques de cuisson selon l'utilisation souhaitée de l'appareil électrique (gaufrier, cuiseur à madeleines, gril à croque-monsieur...), et, d'autre part, pour répartir la chaleur dégagée par la résistance vers la plaque de cuisson. Par ailleurs, de façon à avoir une bonne cuisson, la plaque de cuisson utilisée est en aluminium de fonderie qui est connu pour ses qualités thermiques.

Toutefois, un tel sous-ensemble diffuse de la chaleur également vers la coquille de l'appareil, ce qui créé des pertes caloriques et nécessite une coquille qui résiste à cette chaleur. De plus, vu l'épaisseur de telles plaques de cuisson en aluminium (environ 2 mm), de tels sous-ensemble chauffants ont un coût de fabrication relativement élevé.

Il existe aussi dans l'art antérieur des sous-ensembles chauffants comportant une plaque de diffusion en aluminium moulé avec une résistance électrique encastrée dans la face de la plaque de diffusion opposée à celle supportant la plaque de cuisson amovible. Toutefois, un tel sous-ensemble présente l'inconvénient de requérir l'encastrement de la résistance dans la plaque de diffusion, et de rayonner de la chaleur en direction de la coquille.

Le problème posé est de réaliser un sous-ensemble chauffant dont les pertes thermiques vers la coquille de l'appareil sont réduites sans diminuer la qualité de la transmission de la chaleur à l'aliment à cuire ou à griller, et dont la fabrication peut être simplifiée, ce qui permet de réduire le coût de fabrication sans altérer la qualité de cuisson de l'appareil.

Selon la présente invention, la plaque de diffusion est conformée de telle sorte qu'elle épouse sur une hauteur prédéterminée à partir du plan de fond au moins une partie des empreintes de chaque cavité apte à recevoir un aliment de telle façon que la surface de la plaque de diffusion est en contact avec la surface de cette cavité au delà du plan de fond

Une plaque de diffusion ayant une telle forme permet de mieux transmettre la chaleur provenant de la résistance électrique vers la plaque de cuisson que dans les sous-ensembles chauffants de l'art antérieur où cette transmission ne se faisait que par rayonnement et/ou par conduction via quelques points de contact.

Selon un mode particulier , la plaque de cuisson est en acier inoxydable revêtu, et la plaque de diffusion est en aluminium. Selon ce mode, la plaque de cuisson et la plaque de diffusion peuvent être réalisées par emboutissage. Et vue l'efficacité d'une telle combinaison de plaques suivant l'invention, la longueur de la résistance électrique peut être réduite : une simple boucle ouverte suffit, au lieu d'un serpentin. Bien évidemment, le coût de fabrication s'en trouve réduit.

D'autres avantages et particularités de la présente invention apparaîtront dans la description qui va suivre.

Aux dessins donnés à titre d'exemple non limitatifs :
La figure 1 est une vue en perspective éclatée d'un appareil électrique du type gaufrier muni d'un sous-ensemble chauffant conforme à la présente invention ;
la figure 2 est une vue en perspective d'un sous-ensemble chauffant selon la présente invention ;
la figure 3 est une vue similaire à la figure 2, le sous-ensemble étant représenté de façon éclatée et retournée ;
la figure 4 est une vue en coupe d'une sous-ensemble selon la ligne IV-IV de la figure 5 ; et
la figure 5 est une vue en perspective semblable à la figure 2, dans laquelle les surfaces de contact entre la plaque de cuisson et la plaque additionnelle sont hachurées.

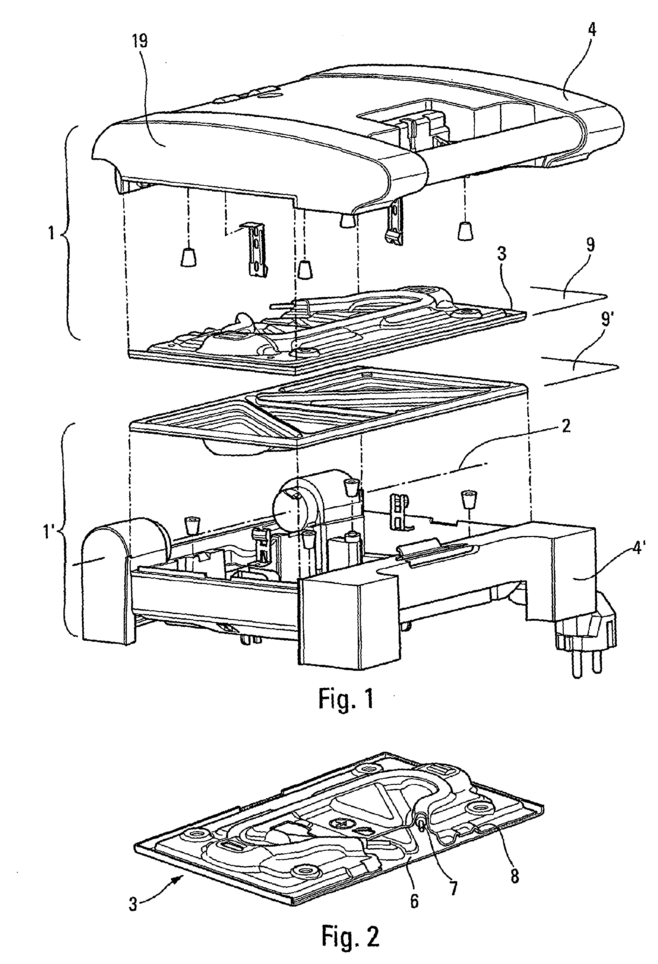

Comme on peut le voir à la figure 1, un appareil électrique du type gaufrier comprend de façon classique deux capots 1,1' qui sont mobiles entre eux autour d'un axe d'articulation 2, entre une position ouverte et une position fermée.

Chaque capot 1,1' comprend un sous-ensemble chauffant 3,3' qui est adapté à recevoir et à cuire (ou à griller) un aliment. Chaque capot 1,1' comprend aussi une coquille 4,4' qui forme le corps du capot 1,1' et qui est adaptée à servir de support au sous-ensemble chauffant 3,3'. Enfin, chaque capot 1,1' comprend des moyens de liaison qui sont adaptés à fixer le sous-ensemble chauffant 3,3' à la coquille correspondante 4,4'.

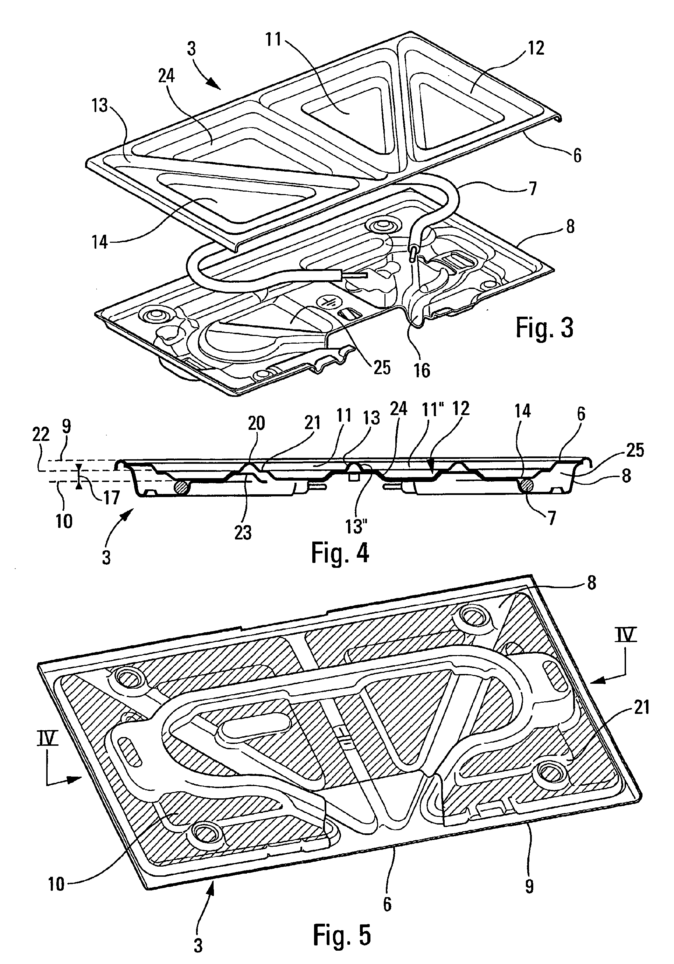

Comme on peut le voir à la figure 3, un sous-ensemble chauffant 3 comporte une plaque de cuisson 6, une résistance électrique 7 et une plaque de diffusion 8.

La plaque de cuisson 6 est en creux et est délimitée par un plan de jonction 9 périphérique qui est défini comme étant le plan du sous-ensemble chauffant 3 qui est en contact avec le plan de jonction 9' du sous-ensemble 3' de l'autre capot 1' quand les deux capots 1, 1' sont en position fermée.

La plaque de cuisson 6 comporte au moins une cavité 11 qui est adaptée à recevoir l'aliment à cuire et qui débouche dans le plan de jonction 9. Chaque cavité 11 comporte au moins une empreinte 24 qui reprend la forme de l'aliment à cuire. L'ensemble des empreintes 24 d'une plaque de cuisson 6 forme la zone de cuisson 12 de la plaque de cuisson 6.

La plaque de cuisson 6 est délimitée par un plan de fond 10 qui correspond au plan sensiblement parallèle au plan de jonction 9 passant par le point le plus profond de chaque cavité 11. Quand la cavité 11 possède une paroi latérale 13 et une paroi de fond plane 14 (comme dans l'exemple illustré à la figure 4), le plan de fond 10 correspond à cette paroi de fond plane 14. Quand la cavité 11 possède une paroi courbe dans le sens de la profondeur (comme, par exemple, pour les cuiseurs à madeleines), le plan de fond 10 correspond au plan passant par le point le plus profond de chacune des cavités 11 de la plaque de cuisson 6.

La résistance électrique 7 est disposée contre la face de la plaque de cuisson 6 qui est opposée à la face comportant les empreintes 24. Dans l'exemple illustré, la résistance électrique 7 est disposée au niveau du plan de fond 10.

La forme de la résistance électrique 7 est adaptée à la surface de la zone de cuisson 12 et à la largeur et à la longueur de la plaque de cuisson 6 dans le plan de base.

La plaque de diffusion 8 comporte un logement 16 qui épouse la forme de la résistance électrique 7 et est adapté à la recevoir. Ainsi, la résistance électrique 7 est prise en sandwich entre la plaque de cuisson 6 et la plaque de diffusion 8.

Selon l'invention, la plaque de diffusion 8 est conformée de sorte qu'elle épouse sur une hauteur prédéterminée 17, à partir du plan de fond 10, au moins une partie de l'ensemble des empreintes 24 des cavités 11. De cette façon, la plaque de diffusion 8 est en contact avec la surface des cavités 11 de la plaque de cuisson 6 au delà du plan de fond 10.

Ainsi, la plaque de diffusion 10, comprend, outre le logement 16 recevant la résistance électrique 7, une cavité 25 recevant la plaque de cuisson 6 sur la hauteur prédéterminée 17.

Le rapport entre la surface de la zone de cuisson 12 en contact avec la plaque de diffusion 8 sur la surface de la zone de cuisson 12 est au moins égal à 0,25, de préférence supérieure à 0,3, voire à 0,4.

De préférence, la plaque de cuisson 6 est réalisée en un matériau qui est un mauvais conducteur thermique, par exemple en acier inoxydable, et son épaisseur, sensiblement constante, est comprise entre 0,6 et 0,8 mm. Une telle plaque de cuisson 6 peut être facilement réalisée par emboutissage puis par découpage d'une tôle. Préalablement à son emboutissage, la plaque d'acier inoxydable peut être revêtue d'un matériau anti-adhésif du côté devant être en contact avec l'aliment à cuire.

De préférence, la plaque de diffusion 8 est réalisée en un matériau qui est un bon conducteur thermique, par exemple en aluminium, et son épaisseur, sensiblement constante, est comprise entre 0,8 et 2 mm, et de préférence entre 0,8 mm et 1 mm. Une telle plaque de diffusion 8 peut être réalisée par emboutissage.

La plaque de diffusion 8 joue ainsi le rôle de diffuseur thermique en répartissant par conduction l'énergie thermique provenant par la résistance électrique 7 sur la partie de la plaque de cuisson 6 qui est en contact avec la plaque de diffusion 8.

Plus la surface de contact entre la plaque de cuisson 6 et la plaque de diffusion 8 est importante, plus la répartition de l'énergie thermique à la surface de la plaque de cuisson 2 est homogène et donc, moins la faible conductivité thermique de l'acier inoxydable constituant la plaque de cuisson 2 est gênante.

De plus, plus la surface de contact entre la plaque de cuisson 6 et la plaque de diffusion 8 est importante, plus la quantité de chaleur transmise à la plaque de cuisson 6 est importante, et plus celle transmise en direction de la coquille 4 est faible.

Il est ainsi possible d'utiliser des coquilles 4,4' en matière plastique peu coûteuse ne résistant pas à de fortes températures proche de 200°C en continu. Dans ce dernier cas, il est particulièrement intéressant de limiter l'effet de diffusion de la plaque de diffusion 8 en utilisant une plaque de diffusion 8 de faible épaisseur, c'est à dire entre 0,8 et 1 mm : la chaleur provenant de la résistance 7 est plus faiblement transmise vers le rebord périphérique de la plaque de diffusion 8, donc plus faiblement transmise au rebord périphérique de la plaque de cuisson 6, et dons plus faiblement transmise aux parois latérales 19 de la coquille 4.

La plaque de cuisson 6 comporte un rebord périphérique proche des parois latérales 19 de la coquille 4 et situé sensiblement au niveau du plan de jonction 9. De même, la plaque de diffusion 8 comporte un rebord périphérique par laquelle elle est fixée au rebord périphérique de la plaque de cuisson 6.

L'assemblage de la plaque de cuisson 6 avec la plaque de diffusion 8 peut être fait par soudage, collage, ou, de préférence pour des raisons de coût, par rivetage ou par vissage. De préférence, la plaque de cuisson 6 et la plaque de diffusion 8 sont fixées l'une à l'autre par clinchage, c'est à dire par déformation mutuelle suite à un emboutissage commun : l'enchâssement de la plaque de cuisson 6 dans la plaque de diffusion 8 permet d'avoir une meilleure tenue lors de la montée et de la descente en température malgré la différence de dilatation entre les deux métaux utilisés.

De plus, quand la plaque de cuisson 6 comporte plusieurs cavités 11, le plan de jonction 9 comporte des surfaces de jonction 20 réalisant la jonction entre les différentes cavités 11.

Pour des raisons pratiques, par exemple la qualité de l'emboutissage de la plaque de diffusion 8, la cavité 25 de la plaque de diffusion 8 est en contact avec seulement une partie de la zone de cuisson 12 située dans la hauteur prédéterminée 17 : les sections des parois latérales 13 d'une cavité 11 de la plaque de cuisson 6 qui font directement face à une section d'une paroi latérale 13" d'une cavité 11" adjacente de la même plaque de cuisson 6 peuvent se trouver trop proches les unes des autres pour que la cavité 25 de la plaque de diffusion 8 épouse ces sections de parois latérales 13,13' proches.

Dans l'exemple illustré à la figure 4, chaque cavité 11 de la plaque de cuisson 6 comprend un épaulement annulaire 21. L'épaulement annulaire 21 est sensiblement parallèle au plan de jonction 9, il est situé entre le plan de fond 10 et le plan de jonction 9, et il s'étend radialement vers l'intérieur de la cavité 11. Une telle plaque de cuisson 6 est adaptée à griller des croques-monsieurs : le croque-monsieur disposé dans la cavité 11 a ses bords comprimés par l'épaulement annulaire 21 des deux sous-ensembles chauffants 3,3' quand les deux capots 1,1' sont en position fermée.

La cavité 25 de la plaque de diffusion 8 est en contact avec au moins une partie de l'ensemble des cavités 11, du plan de fond 10 jusqu'à un plan intermédiaire 22 défini par l'ensemble des épaulements annulaires 21. Dans l'exemple illustré, la cavité 25 de la plaque de diffusion 8 comprend une surface plane 23 qui est en en contact avec au moins une partie de l'ensemble des épaulements annulaires 21.

Bien évidemment, l'invention n'est pas limitée au mode de réalisation illustré par les figures annexées.

## Revendications

1. Sous-ensemble chauffant (3) d'un appareil du type gaufrier, comportant une plaque de cuisson (6) en creux qui est délimitée par un plan de jonction (9) périphérique, qui possède au moins une cavité (11) apte à recevoir un aliment à cuire, débouchant dans le plan de jonction (9), et munie d'empreintes (24) reprenant la forme de l'aliment, et qui présente un plan de fond (10), une résistance électrique (7) disposée contre la face de la plaque de cuisson (6) opposée à celle portant les empreintes (24), et une plaque de diffusion (8) comportant un logement (16) recevant la résistance (7) disposée entre la plaque de cuisson (6) et la plaque de diffusion (8), **caractérisé en ce que** la plaque de diffusion (8) épouse sur une hauteur prédéterminée (17) à partir du plan de fond (10) au moins une partie des empreintes (24) de chaque cavité (11) de telle façon que la surface de la plaque de diffusion (8) est en contact avec la surface de cette cavité (11) au delà du plan de fond (10).

2. Sous-ensemble chauffant (3) selon la revendication 1, **caractérisé en ce que** l'ensemble des empreintes (24) forme une zone de cuisson (12), et **en ce que** le rapport entre la surface de cette zone de cuisson (12) en contact avec la plaque de diffusion (8) sur la surface totale de la zone de cuisson (12) est au moins égal à 0,25, de préférence supérieure à 0,3, voire à 0, 4.

3. Sous-ensemble chauffant (3) selon la revendication 1 ou 2, **caractérisé en ce que** la plaque de cuisson (6) est en acier inoxydable.

4. Sous-ensemble chauffant (3) selon l'une des revendications 1 à 3, **caractérisé en ce que** l'épaisseur de la plaque de cuisson (6) est comprise entre 0,6 et 0,8 mm.

5. Sous-ensemble chauffant (3) selon l'une des revendications 1 à 4, **caractérisé en ce que** la plaque de cuisson (6) est réalisée par emboutissage d'une tôle.

6. Sous-ensemble chauffant (3) selon l'une des revendications 1 à 5, **caractérisé en ce que** la plaque de diffusion (8) est en aluminium.

7. Sous-ensemble chauffant (3) selon l'une des revendications 1 à 6, **caractérisé en ce que** l'épaisseur de la plaque de diffusion (8) est comprise entre 0,8 et 2 mm, et de préférence entre 0,8 et 1 mm.

8. Sous-ensemble chauffant (3) selon l'une des revendications 1 à 7, **caractérisé en ce que** la plaque de diffusion (8) est réalisée par emboutissage d'une tôle.

9. Sous-ensemble chauffant (3) selon l'une des revendications 1 à 8, **caractérisé en ce que** la plaque de diffusion (8) est en contact avec au moins une partie de l'ensemble des cavités (11), du plan de fond (10) à un plan intermédiaire (22) défini par des épaulements annulaires (21) sensiblement parallèles au plan de jonction (9), s'étendant radialement vers l'intérieur de la cavité (11), et adaptés à comprimer les rebords de l'aliment en cours de cuisson quand les capots (1) de l'appareil sont en position fermée.

10. Sous-ensemble chauffant (3) selon la revendication 9, **caractérisé en ce que** la plaque de diffusion (8) comprend une surface plane (23) en contact avec au moins une partie de l'ensemble des épaulements annulaires (21).

11. Sous-ensemble chauffant (3) selon l'une des revendications 1 à 10, **caractérisé en ce que** la plaque de diffusion (8) et la plaque de cuisson (6) sont fixées entre elles par clinchage.

## Claims

1. Heating subassembly (3) of an apparatus of the waffle iron type, including a hollowed-out cooking plate (6) delimited by a peripheral joining plane (9), which has at least one cavity (11) suitable for receiving a food to be cooked, opening out in the joining plane (9), and provided with impressions (24) reproducing the shape of the food, and which has a bottom plane (10), an electrical resistance element (7) arranged against the face of the cooking plate (6) opposite that bearing the impressions (24), and a diffusion plate (8) including a housing (16) receiving the resistance element (7) arranged between the cooking plate (6) and the diffusion plate (8), **characterized in that** the diffusion plate (8) matches, over a predetermined height (17) from the bottom plane (10), at least part of the impressions (24) of each cavity (11) such that the surface of the diffusion plate (8) is in contact with the surface of this cavity (11) beyond the bottom plane (10).

2. Heating subassembly (3) according to Claim 1, **characterized in that** the impressions (24) as a whole form a cooking area (12), and **in that** the ratio between the surface area of this cooking area (12) in contact with the diffusion plate (8) over the entire surface of the cooking area (12) is at least equal to 0.25, preferably greater than 0.3, and even greater than 0.4.

3. Heating subassembly (3) according to Claim 1 or 2, **characterized in that** the cooking plate (6) is made from stainless steel.

4. Heating subassembly (3) according to one of Claims 1 to 3, **characterized in that** the thickness of the cooking plate (6) is between 0.6 and 0.8 mm.

5. Heating subassembly (3) according to one of Claims 1 to 4, **characterized in that** the cooking plate (6) is produced by drawing a metal sheet.

6. Heating subassembly (3) according to one of Claims 1 to 5, **characterized in that** the diffusion plate (8) is made from aluminium.

7. Heating subassembly (3) according to one of Claims 1 to 6, **characterized in that** the thickness of the diffusion plate (8) is between 0.8 and 2 mm, preferably 0.8 and 1 mm.

8. Heating subassembly (3) according to one of Claims 1 to 7, **characterized in that** the diffusion plate (8) is produced by drawing a metal sheet.

9. Heating subassembly (3) according to one of Claims 1 to 8, **characterized in that** the diffusion plate (8) is in contact with at least a part of the cavities (11) as a whole, from the bottom plane (10) to an intermediate plane (22) defined by annular shoulders (21) substantially parallel to the joining plane (9), extending radially towards the inside of the cavity (11), and suitable for compressing the edges of the food during cooking when the leaves (1) of the apparatus are in the closed position.

10. Heating subassembly (3) according to Claim 9, **characterized in that** the diffusion plate (8) comprises a planar surface (23) in contact with at least part of the annular shoulders (21) as a whole.

11. Heating subassembly (3) according to one of Claims 1 to 10, **characterized in that** the diffusion plate (8) and the cooking plate (6) are fixed together by means of clinching.

## Patentansprüche

1. Heizeinrichtung (3) eines Geräts in der Bauweise eines Waffeleisens, mit einer vertieften Backplatte (6), die durch eine umfängliche Verbindungsebene (9) begrenzt ist, die wenigstens eine Vertiefung (11) besitzt, welche ein zu backendes Lebensmittel aufnehmen kann und in der Verbindungsebene (9) mündet und mit Abformungen (24) versehen ist, welche die Form des Lebensmittels wiedergeben, und die eine Bodenebene (10), einen elektrischen Widerstand (7), der zwischen der Fläche der Backplatte (6), die derjenigen gegenüberliegt, welche die Ausformungen (24) trägt, und einer Diffusionsplatte (8) angeordnet ist, welche eine den zwischen der Backplatte (6) und der Diffusionsplatte (8) angeordneten Widerstand (7) aufnehmende Aufnahme (16) umfasst, **dadurch gekennzeichnet, dass** sich die Diffusionsplatte (8) in einer vorbestimmten Höhe (17) von der Bodenebene (10) an wenigstens einen Bereich der Ausformungen (24) jeder Vertiefung (11) in der Weise anschmiegt, dass sich die Oberfläche der Diffusionsplatte (8) oberhalb der Bodenebene (10) in Kontakt mit der Oberfläche dieser Vertiefung (11) befindet.

2. Heizeinrichtung (3) nach Anspruch 1, **dadurch gekennzeichnet, dass** die Gesamtheit der Ausformungen (24) eine Backzone (12) bildet, und dass das Verhältnis zwischen der mit der Diffusionsplatte (8) in Kontakt befindlichen Oberfläche dieser Backzone (12) zur Gesamtfläche der Backzone (12) wenigstens 0,25, vorzugsweise über 0,3, sogar bis 0,4 beträgt.

3. Heizeinrichtung (3) nach Anspruch 1 oder 2, **dadurch gekennzeichnet, dass** die Backplatte (6) ein rostfreier Stahl ist.

4. Heizeinrichtung (3) nach einem der Ansprüche 1 bis 3, **dadurch gekennzeichnet, dass** die Dicke der Backplatte (6) zwischen 0,6 und 0,8 mm beträgt.

5. Heizeinrichtung (3) nach einem der Ansprüche 1 bis 4, **dadurch gekennzeichnet, dass** die Backplatte (6) durch Tiefziehen eines Bleches hergestellt ist.

6. Heizeinrichtung (3) nach einem der Ansprüche 1 bis 5, **dadurch gekennzeichnet, dass** die Diffusionsplatte (8) aus Aluminium ist.

7. Heizeinrichtung (3) nach einem der Ansprüche 1 bis 6, **dadurch gekennzeichnet, dass** die Dicke der Diffusionsplatte (8) zwischen 0,8 und 2 mm und vorzugsweise zwischen 0,8 und 1 mm beträgt.

8. Heizeinrichtung (3) nach den Ansprüchen 1 bis 7, **dadurch gekennzeichnet, dass** die Diffusionsplatte (8) durch Tiefziehen eines Bleches hergestellt ist.

9. Heizeinrichtung (3) nach einem der Ansprüche 1 bis 8, **dadurch gekennzeichnet, dass** sich die Diffusionsplatte (8) in Kontakt mit wenigstens einem Bereich der Gesamtheit der Vertiefungen (11) befindet, von der Bodenebene bis zu einer Mittelebene (22), die durch ringförmige Schultern (21) im Wesentlichen parallel zur Verbindungsebene (9) definiert ist, welche sich radial zum Inneren der Vertiefung (11) erstrecken und so ausgebildet sind, dass sie die Ränder des Lebensmittels im Verlauf des Backvorganges komprimieren, wenn die Hauben (1) des Gerätes in Schließstellung sind.

10. Heizeinrichtung (3) nach Anspruch 9, **dadurch gekennzeichnet, dass** die Diffusionsplatte (8) eine ebene Fläche (23) in Kontakt mit wenigstens einer Partie der Gesamtheit der Ringschultern (21) aufweist.

11. Heizeinrichtung (3) nach einem der Ansprüche 1 bis 10, **dadurch gekennzeichnet, dass** die Diffusionsplatte (8) und die Backplatte (6) durch mechanische Kaltverformung aneinander fixiert sind.
